# EUROPÄISCHE PATENTSCHRIFT

(11) **EP 0 793 741 B1**
(45) Veröffentlichungstag und Bekanntmachung des Hinweises auf die Patenterteilung: **09.02.2000**
(21) Anmeldenummer: 95940204.1
(22) Anmeldetag: 18.11.1995
(51) Int. Cl.: D04H 1/60, D04H 1/00, D06M 15/41, D06M 15/507

(54) **BINDEMITTELZUSAMMENSETZUNG ZUR HERSTELLUNG VON FASERVLIESEN UND VERFAHREN ZUR HERSTELLUNG VON FASERVLIES-FORMTEILEN**
BINDER COMPOSITION USEFUL FOR PRODUCING NON-WOVEN FABRICS AND PROCESS FOR PRODUCING MOULDED PARTS MADE OF NON-WOVEN FABRICS
COMPOSITION DE LIANT UTILE POUR PRODUIRE DES NON-TISSES ET PROCEDE DE PRODUCTION DE PIECES MOULEES EN NON-TISSES

(30) Priorität: 24.11.1994 DE 4441765
(43) Veröffentlichungstag der Anmeldung: 10.09.1997
(73) Patentinhaber: TEODUR N.V., 4848 BR Breda (NL); RIETER Automotive Germany GmbH, 64380 Rossdorf (DE)
(72) Erfinder: THYSSEN, Stan, NL-5581 TB Waalre (NL); SCHMITT, Walter, D-36251 Ludwigsau-Mecklar (DE); HILMES, Dieter, D-34286 Spangenberg (DE)
(74) Vertreter: Hrabal, Ulrich
(86) Internationale Anmeldenummer: EP9504542
(87) Internationale Veröffentlichungsnummer: WO9616218

(56) Entgegenhaltungen:
- EP-A- 0 076 429
- EP-A- 0 258 684
- EP-A- 0 308 074
- EP-A- 0 528 456
- WO-A-95/30034

## Beschreibung

Die Erfindung betrifft ein Verfahren zur Herstellung von Faservliesen und Faservliesformteilen sowie eine spezielle hierfür verwendbare Mischung.

In der Industrie sind Formteile auf Basis von Faservliesen weit verbreitet. Es handelt sich dabei um Vliese aus Fasern verschiedener Art, die mit Bindemittel vermischt werden können. Aus diesen Faservliesen können dann Vorprodukte hergestellt werden, die sogenannten Prepregs (chemisch gebundene Faservliese), die dann mit den entsprechenden Verarbeitungswerkzeugen geformt, ausgehärtet und gegebenenfalls konfektioniert werden. Ebenso ist es möglich, direkt aus den Fasern und den Bindemittelpulvern entsprechende Faservliesendlosware herzustellen. Diese Formteile oder Planware finden in weiten Bereichen Verwendung. In der Automobilindustrie werden diese Produkte beispielsweise als Formteile, z.B. als Dämmstoff für Motorhauben, Radkästen oder Kofferraumisolation verwendet. Ein anderes Einsatzgebiet ist die Verwendung als Planware, z.B. als Dämmstoff in Waschmaschinen, Wäschetrocknern oder Lautsprechern, in schallabsorbierenden Wänden. Sie können mit weiteren Überzügen versehen werden, z.B. durch Beflocken, Kaschieren oder Laminieren. Diese so mit einer optisch stabilen und dekorativen Oberflächenbeschichtung ausgestatteten Formteile oder Planteile können dann z.B. als Türseitenverkleidung, als Hutablage oder als Deckenverkleidung in der Automobilindustrie eingesetzt werden.

Unter einem Vliesstoff wird ein Textilverbundstoff verstanden, der durch Verfestigung von Vlies, insbesondere Spinnvlies (z.B. Parallel-, Kreuz- oder Wirrfaservlies) auf nassem oder trockenem Weg hergestellt wird. Die Verfestigung geschieht dabei mechanisch (z.B. Nadelfilz) oder nach Art der Papierherstellung mit Hilfe von Zellstofffasern oder chemisch durch Verkleben, Verschweißen oder Anlösen. Die vorliegende Erfindung betrifft den letztgenannten Fall, bei dem zum chemischen Verfestigen dem Vlies ein Bindemittel zugesetzt werden muß.

Die Methoden zur Herstellung von Faservliesen bzw. zum Vermischen dieser Vliese mit Bindemittelpulver sind bekannt. Dabei wird das Fasermaterial, z.B. in einer Fasermischkammer, homogenisiert, und auf ein Transportband als lockere Faserschicht abgelegt.

Das Bindemittelgemisch wird dann auf das Fasermaterial z.B. mit Dosierwalzen oder Vibrationsrinnen aufgebracht und homogen vermischt. Das homogene Gemisch aus Faser und Bindemittelpulver wird zu einem Endlosvlies abgelegt. Die Komponenten dieses Gemisches können entweder durch leichtes Erwärmen und anschließendes Abkühlen miteinander verklebt werden, wobei die Prepregs entstehen, oder es wird Plan- oder Rollenware hergestellt, die bereits vollständig ausgehärtet ist. Die Prepregs sind noch nicht endgültig ausgehärtet, sind jedoch lagerstabil. Nach dem Verarbeiten in die endgültige Form, werden diese Prepregs unter Einwirkung von Wärme bei bis zu 210°C thermisch vernetzt, wobei dreidimensionale duroplastische Formteile erhalten werden.

Heute werden als Bindemittel in vielen Fällen Duroplaste und hier insbesondere Phenolharze benutzt. Verwendung finden Faservliese und Faservlies-Formteile in vielen Bereichen des täglichen Lebens und insbesondere auch in der Automobilindustrie. Bei der Verwendung können Schwierigkeiten auftreten, da Phenolharze als Härterkomponenten die chemische Verbindung Hexamethylentetramin, kurz Hexa genannt, enthalten, die bei unzureichender Reaktion zu Geruchsbelästigung führen kann.

Die JP-A-55-148266 beschreibt ein Formteil aus Faservlies, das unter Verwendung von synthetischen Fasern, Pulverlackabfällen und Harz hergestellt wird. Die nach Artikel 54(3) EPÜ genannte WO 95/30034 betrifft Mischungen aus 80 bis 55 Gew.-% organischen und/oder anorganischen Fasern mit 20 bis 45 Gew.-% einer pulverförmigen Bindemittelmischung aus 30 bis 90 Gew.-% Phenolharz und 70 bis 10 Gew.-% Pulverlackabfällen zur Herstellung von Formteilen und Faservliesen.

Aufgabe der vorliegenden Erfindung ist es, eine Bindemittelmischung und ein Verfahren zur Herstellung von Faservliesformteilen zur Verfügung zu stellen, in denen die üblicherweise verwendeten reinen Harze durch andere Komponenten ersetzt werden können, die zu stabilen, reaktiven Bindemittelmischungen führen, welche zur Herstellung von Faservliesprepregs oder ausgehärteten Faservlieswaren geeignet sind. Eine weitere Aufgabe ist es, den Anteil von gesundheitsschädlichen Substanzen zu senken. Diese Bindemittelmischungen müssen die üblichen Anforderungen bei der Herstellung von Faservliesformteilen erfüllen und dabei ausgehärtete, stabile Formteile ergeben, welche den verschiedenen Anwendungszwecken angepaßt werden können.

Weiterhin ist die Aufgabe zu lösen, Verfahren zum Herstellen von Faservlies-Formteilen mit den veränderten Bindemittelmischungen zu entwickeln.

Es hat sich gezeigt, daß diese Aufgabe gelöst werden kann durch das einen Gegenstand der Erfindung bildende Verfahren zum Herstellen von Faservliesen und Faservlies-Formteilen, insbesondere in Formwerkzeugen, bei dem Faservliese mit Bindemitteln auf der Basis von Pulverlackabfällen chemisch gebunden werden, dadurch gekennzeichnet, daß
eine Mischung, enthaltend
a) 20 bis 45 Gew.-% einer pulverförmigen Bindemittelmischung, enthaltend
   a1) 0 bis unter 30 Gew.-% Phenolharz und
   a2) 100 bis über 70 Gew.-% Abfälle von noch nicht vernetzten Pulverlacken auf Basis von Epoxid-, Polyester-Polyurethan- und/oder Acrylatharzen mit reaktiven Gruppen, und
b) 80 bis 55 Gew.-% organischer und/oder anorganischer Fasern, verarbeitet wird.

Einen weiteren Gegenstand der vorliegenden Erfindung bilden die vorstehenden Mischungen aus den Komponenten a) und b), sowie deren Verwendung zur Herstellung von Formteilen aus Faservliesen.

In der Lackindustrie werden in steigendem Maße Pulverlacke eingesetzt. Diese haben den Vorteil, daß ein lösemittelfreies Auftragsverfahren möglich ist. Damit können die Emissionen in die Umwelt bedeutend verringert werden. Die Auftragsverfahren für Pulverlacke haben jedoch den Nachteil, daß ein erheblicher Anteil der Pulver nicht auf das zu beschichtende Objekt gelangt. Diese Pulver werden in der Lackierkabine als sogenannter Overspray gesammelt. Pulver sind in ihrer Korngrößenverteilung und in der Reinheit empfindlich. Deshalb muß dieser Overspray als Abfall entsorgt werden. Bei der letzten Stufe der Lackpulverherstellung werden die zerkleinerten Lackpulverextrudate gemahlen. Bei diesem Mahlvorgang fällt Feinstaub an, der störend wirkt bei dem Lackierprozeß. Deshalb wird dieser Staub weitgehend entfernt. Dieser Staub ist nur schwer wieder aufzubereiten und muß als Sonderabfall entsorgt werden.

Bei den für die verschiedene Faservliese einsetzbaren Fasern handelt es sich um gewebte, verfilzte oder vermengte Fasern. Die Fasern bestehen aus den bekannten Materialien, z.B. natürlichen, organischen und anorganischen Fasern. Beispiele dafür sind Glasfasern, Steinwollfasern, Polyesterfasern, Acrylharzfasern, Polyolefinfasern, Wollfasern, Baumwollfasern, Leinfasern oder ähnliche. Bevorzugt werden Textilfasern, insbesondere Baumwollfasern, z.B. Faserabfälle aus der Textilindustrie, eingesetzt. Diese Fasern bzw. die Faservliese daraus sind in der Industrie bekannt. Ebenso sind die Verfahren bekannt mit denen sie hergestellt werden können. Das kann beispielsweise durch Weben oder Verfilzen geschehen. Die entstehenden Faservliese sollen im wesentlichen trocken sein, sie können gegebenenfalls mit Additiven imprägniert sein.

Bei den in den erfindungsgemäßen Mischungen beispielsweise einsetzbaren Phenolharzen handelt es sich um die üblichen reaktiven Phenolharze, die seit langem in der Industrie bekannt sind. Es sind dies beispielsweise reaktive, nicht vernetzte OH-Gruppen enthaltende pulverförmige Phenolharze. Derartige Harze werden bereits bei der Herstellung von Formteilen aus Faservliesen eingesetzt. Beispielsweise können Phenolharze auf Basis von Phenol und Formaldehyd, wie sie beispielsweise als Resole oder Novolake bekannt sind, eingesetzt werden. Als mögliche Vernetzer können diese Harze Kondensationsprodukte von Formaldehyd enthalten.

Diese Harze sind in der Literatur schon weit beschrieben, z.B. in R.N. Shreve, "The Chemical Process Industries", Chapt. Plastics, 1945 und kommerziell erhältlich. Weitere Phenolharze werden auch in DE-A-38 33 656, EP-A-0 363 539 sowie EP-A-0 376 432 beschrieben. Besonders bevorzugt sind Phenolharze vom Typ Novolake.

Die Reaktivität der Phenolharze wird auch durch Art und Menge des eingesetzten Vernetzers bestimmt. Im allgemeinen tritt eine Vernetzungsreaktion zwischen 120°C und 222°C ein.

Die Harze liegen im allgemeinen pulverförmig vor. Geeignete Korngrößen liegen beispielsweise zwischen 0,1 und 500 µm, bevorzugt zwischen 2 und 150 µm, besonders bevorzugt zwischen 10 und 60 µm.

Die Korngrößen der eingesetzten Pulverlackabfälle liegen beispielsweise in dem gleichen Bereich wie die der Harze und liegen bevorzugt zwischen 1 bis 300 µm, besonders bevorzugt zwischen 10 und 60 µm. Werden Pulverlackabfälle eingesetzt, deren Korngrößen für den gewünschten Anwendungszweck zu klein sind, ist es möglich, größere Korngrößen durch Verbacken der Teilchen zu erhalten.

Die erfindungsgemäß einsetzbaren Pulverlackabfälle sind solche der üblichen bekannten Pulverlacke. Die Bindemittel der Pulverlacke können dabei beispielsweise auf Basis von Epoxidharzen, Polyesterharzen, Polyurethanharzen oder Acrylatharzen sein. Diese Pulverlackabfälle fallen beispielsweise an als Overspray aus Lackierkabinen oder als Fehlchargen bei der Herstellung der Pulverlacke. Weiterhin ist es möglich, daß Filterstäube gesammelt und eingesetzt werden, sowie Rückstände aus dem Vermahlen der Pulver.

Die in der erfindungsgemäßen Mischung einsetzbaren Pulverlackabfälle sind noch nicht vernetzt. Sie enthalten reaktive Gruppen wie beispielsweise Carboxylgruppen, Epoxidgruppen, Hydroxylgruppen, Aminogruppen, Amidgruppen oder Isocyanatderivate. Diese können bei Erwärmen miteinander reagieren. Die Vernetzungstemperatur hängt von ihrem Grundgerüst ab. Üblicherweise liegen sie zwischen 120 und 220°C. Pulverlacke mit Vernetzungstemperaturen über 180°C werden vorzugsweise nur in geringen Mengen zugesetzt, um auch bei Aushärtungstemperaturen der Formteile von etwa 160°C eine möglichst vollständige Vernetzung der verwendeten Bindemittelmischung zu erreichen. Hinzukommt, daß bei hohen Vernetzungstemperaturen, insbesondere bei Verwendung von Faservlies aus Kunststoffasern die Gefahr besteht, daß die Fasern abgebaut werden, was zu einer Stabilitätserniedrigung des Formteils führt. Es ist bevorzugt, daß die Lackpulver/Vernetzungstemperaturen unter 160°C aufweisen.

Die verwendeten Pulverlackabfälle enthalten bekannte Bindemittelsysteme. Es handelt sich hierbei um übliche Harze, beispielsweise auf Epoxid-, Polyester-, Polyurethan- oder Acrylatbasis.

Die Epoxidpulverlacke enthalten Epoxidharze als Hauptbindemittelkomponente. Diese vernetzen häufig über hydroxylgruppenhaltige insbesondere amid- oder amingruppenhaltige Härter.

Weiterhin sind Polyesterpulverlacke bekannt, bei denen der Hauptbindemittelbestandteil carboxylgruppenhaltige Polyester sind. Als in Anteilen vorhandene Vernetzer sind beispielsweise epoxidgruppenhaltige Vernetzer oder amino- oder amidgruppenhaltige Vernetzer bekannt. Dabei ist es üblich, daß jeweils die Vernetzer höher funktionell sind als die Hauptbindemittelkomponente. Werden Epoxid/Polyestermischpulver eingesetzt, sogenannte Hybridsysteme, liegen annähernd gleiche Mengenverhältnisse von Polyestern bzw. Epoxidharzen vor.

Polyurethanpulverlacke basieren auf hydroxylgruppenhaltigen Polyestern, die über reversibel blockierte Polyisocyanate, die z.B. mit bekannten Verkappungsmitteln wie Caprolactam oder Ketoxim geschützt sind, vernetzen können oder die als Urethdion vorliegen.

Pulverlacke vom Acrylattyp sind im allgemeinen Mischungen von zwei oder mehr Acrylatharzen, die jeweils funktionelle Gruppen wie Epoxidgruppen, Carboxylgruppen, Hydroxylgruppen oder Isocyanatgruppen enthalten. Dabei sind die untereinander reagierenden Gruppen auf verschiedene Moleküle verteilt.

Diese Bindemittelpulver sind z.B. in S.T. Harris, "The Technology of Powder Coatings", 1976 oder in D.A. Bate, "The Science of Powder Coatings" Vol I, 1990 beschrieben.

Es können farblose oder pigmentierte Pulverlackabfälle eingesetzt werden. wobei als Pigmente die üblichen bekannten anorganischen oder organischen Farbpigmente möglich sind. Ebenso ist es möglich, daß Effektpigmente, z.B. Metallicpigmente in die Pulver eingearbeitet sind. Eine Trennung nach Farbton ist nicht erforderlich. Die Kornfeinheit der Pulver ist nicht wesentlich, es sollte nur darauf geachtet werden, daß für die Herstellung der Bindemittelmischung im allgemeinen eine Durchschnittsprobe der verschiedenen Pulverreste eingesetzt wird. Das führt zu einem besseren Mischungsverhalten und zu einer konstanteren Herstellung der Bindemittelmischung.

Es können beliebige einzelne Pulverlackabfälle in den Bindemittelmischungen eingesetzt werden. Werden nur geringe Anteile von Phenolharzen den Mischungen beigesetzt (weniger als 5 %), so werden bevorzugt Pulverlacke eingesetzt, die eine erhöhte Vernetzungsdichte aufweisen. Bevorzugt ist der Einsatz von Epoxidpulvern, Polyesterpulvern oder Gemischen davon als a₂). Dabei können gegebenenfalls bis zu 60 Gew.-% von a₂), bevorzugt bis zu 30 Gew.-% durch Polyurethanpulver und/oder Polyacrylatpulver ersetzt werden. Eine besonders bevorzugte Ausführungsform benutzt ein Gemisch von Epoxidpulvern und Polyesterpulvern als a₂). Dabei ist es möglich, direkt eine Mischung a₂) innerhalb der gewünschten Gewichtsverhältnisse herzustellen und zu lagern, oder es ist möglich, diese aus den einzelnen Komponenten direkt vor der Weiterverarbeitung durch Mischen herzustellen. Die einzelnen chemischen Typen der Materialien werden homogen gemischt, so daß eine in Korngrößenverteilung und Zusammensetzung und Pigmentierung durchgemischte Probe entsteht. Gegebenenfalls kann über den Zusatz von weiteren zusätzlichen vernetzenden Anteilen die Vernetzungsdichte oder die Reaktivität der Bindemittelmischung beeinflußt werden.

Eine bevorzugte Ausführungsform arbeitet mit einer Mischung von Pulverlackharzen ohne zusätzliche Phenolharze. Dabei können die Pulverlackabfälle oder Pulverlacke gemischt werden. Eine günstige Korngrößenverteilung kann gegebenenfalls über eine zusätzliche Vermahlung oder über ein Agglomerieren von sehr feinen Pulverlackbestandteilen erreicht werden. Die Korngröße kann bevorzugt in der für die Phenolharze angegebenen Größenordnung liegen.

Zusammen mit den Pulvern können gegebenenfalls übliche Additive oder Zusatzstoffe zugegeben werden. Dabei kann es sich beispielsweise um Katalysatoren, Akzeleratoren oder Flammschutzmittel handeln. Als Katalysatoren werden bevorzugt Zinnverbindungen wie Dibutylzinndilaurat, Carbonsäuresalze wie Lithiumbenzoat, quartäre Ammoniumverbindungen, wie Tetrabutylammoniumbromid, Cetyltrimethylammoniumbromid, Benzyltrimethylammoniumchlorid, Benzyltriethylammoniumchlorid oder Tetramethylammoniumchlorid oder tertiäre Amine wie Triisopropylamin oder Methylimidazol eingesetzt. Geeignete Akzeleratoren und Vernetzer sind beispielsweise basische epoxidgruppenhaltige Verbindungen wie Triglycidylisocyanurate, Glycolurile, Dicyandiamid oder beta-Hydroxylamide. Dabei können diese Additive einzeln als pulverförmige Substanzen zugegeben werden. Ebenso können sie als Masterbatch mit Bindemittelanteilen vermischt eingebracht werden oder sie werden als Mischung mit dem Bindemittelpulver a₁) zudosiert.

Weiterhin können flammhemmende Substanzen eingebracht werden. Es handelt sich dabei um die üblichen bekannten Substanzen, die in Brandschutzüberzügen enthalten sind. Beispiele für solche Verbindungen sind Borate, wie Natriumborat; Phosphate wie Ammoniumphosphat oder Natriumphosphat; Aluminiumhydroxide oder -oxide; weitere geeignete Verbindungen sind beispielsweise schwermetallhaltige Verbindungen wie Zinnoxidverbindungen oder perbromierte oder perchlorierte Verbindungen wie Tetrabromphenol. Bevorzugt sollen jedoch schwermetallfreie und halogenfreie flammhemmende Substanzen eingesetzt werden. Diese flammhemmenden Substanzen liegen als Pulver vor. Sie können über einen separaten Masterbatch eingebracht werden oder sie werden über die Bindemittelpulver a₁) oder a₂) jeweils als homogene Mischung mit der Pulverkomponente zudosiert.

Pigmente können in die Bindemittelmischung a) ebenfalls noch eingebracht werden. Im allgemeinen ist jedoch bevorzugt keine zusätzlichen Pigmente einzubringen, sondern nur die faserförmigen Füllstoffe des Faservlieses einzusetzen bzw. die in den Pulverlacken a₂) enthaltenen Pigmente.

Das vor dem Aushärten gebildete Prepreg oder das fertige Formteil enthält im allgemeinen 55 bis 80 Gew.-% Fasern und 20 bis 45 Gew.-% der Bindemittelmischung.

In einer bevorzugten Ausführungsform besteht die Bindemittelmischung aus 0 bis 10 Gew.-% Phenolharzen und 100 bis 90 Gew.-% Pulverlackabfällen. Die oben beschriebenen Additive und Zusatzstoffe können in einer Menge bis zu 20 Gew.-%, bevorzugt bis zu 15 Gew.-% enthalten sein, wobei die Summe aller Komponenten 100 Gew.-% ergibt. Es können beliebige Pulverlackabfälle eingesetzt werden. Es ist möglich, nur einen Pulverlacktyp oder ein Gemisch aus mehreren einzusetzen, bevorzugt ist jedoch ein Gemisch aus Polyester- und Epoxidharzen. Es ist weiterhin bevorzugt, daß das Gewichtsverhältnis von Polyesterpulver zu Epoxidpulver 0,2 : 1 bis 7 : 1, bevorzugt 0,8 : 1 bis 3 : 1 ist. Es sollte bei der Auswahl der Pulverlackabfälle darauf geachtet werden, daß diese eine ausreichende Anzahl von reaktiven Gruppen besitzen.

Häufig haben, bedingt durch ihren ursprünglichen Anwendungszweck die normalen Lackpulver im Vergleich zu Phenolharzen niedrige Vernetzungsgeschwindigkeiten, wodurch bei der Lackierung gute Fließ- und Benetzungseigenschaften erzielt werden. Im Rahmen der Erfindung hat es sich gezeigt, daß es günstig ist, beim Einsatz von Lackpulver die entsprechenden Anlagen und Verfahren zum Herstellen von chemisch gebundenen Faservliesen und Faservlies-Formteilen diesem neuen Bindemittel anzupassen.

Ein weiterer Gegenstand der Erfindung sind daher Verfahren zur Herstellung von Formteilen aus Faservliesen und Bindemittelmischungen. Diese Verfahren können den Eigenschaften der Bindemittelpulver angepaßt werden.

Das Verfahren kann mit üblichen für die Herstellung von Faservliesen und Faservliesformteilen geeigneten Vorrichtungen, z.B. Formwerkzeugen durchgeführt werden. Dabei kann es erfindungsgemäß zweckmäßig sein, die Vorrichtungen, bzw. die Verfahrensführung entsprechend anzupassen.

Ein Problem kann z.B. darin bestehen, daß die Pulverlacke und insbesondere Pulverlack-Recyclingmaterial ein anderes Rieselverhalten haben, als die Phenolharze und Phenolharzmischungen. Deshalb ist es günstig, eine Materialaufgabestation in ihrer Leistung zu erhöhen und regelbar auszurüsten. Ferner kann eine bei der Materialaufgabe verwendete Dosierwalze in der Struktur der Riffelung so verändert werden, daß sie einen größeren Rieselfähigkeitsbereich abdecken kann.

Ein weiteres Problem kann z.B. darin liegen, den Pulverlack bzw. das Pulverlack-Recyclingmaterial möglichst gleichmäßig dem Vlies beizugeben. Erfindungsgemäß kann daher zur Vergleichmäßigung die Bindemittelzugabe bevorzugt über eine Banddosierwaage erfolgen.

Es ist auch zweckmäßig, die Behandlung des mit Bindemittel versehenen Vlieses beispielsweise in einem Wärmekanal einer Anpassung des Temperatur/Zeit-Verlaufs zu unterziehen. Schmelzpunkt und Reaktionsgeschwindigkeit können nämlich bei einem Pulverlack anders als bei Phenolharzen sein.

Häufig wird festgestellt, daß ein mit Pulverlackabfällen gebundenes Faservlies eine wesentlich höhere Klebeneigung sowohl an Transportbändern als auch in der Formpresse aufweist. Um diese Klebeneigung herabzusetzen bzw. die Zeit mit erhöhter Klebeneigung zu verkürzen, kann gemäß einer erfindungsgemäßen Ausführungsform das gebundene Faservlies bzw. ein aus dem Formwerkzeug entnommenes Formteil getrocknet werden. An den Transportbändern findet deshalb eine erhöhte Trockner-Absaugung statt.

Es kann auch zweckmäßig sein, eine Schneidanlage zum Längsschneiden des gebundenen Faservlieses umzurüsten. Da die Sprödigkeit/Härte des Faservlieses infolge des Pulverlack-Bindemittels geringer ist, ist es zweckmäßig, wenn der Antrieb der Schneidmesser zur Erzielung einer Friktion nicht mehr durch einen Passiv-Antrieb, sondern durch einen eigenen Antrieb erfolgt.

Probleme können auch bei dem Formen von Faservlies in einem Formwerkzeug auftreten. Es ist daher zweckmäßig, die Reaktionszeit zu beschleunigen und die Klebeneigung des Faservlieses herabzusetzen. Dies kann erfindungsgemäß durch Heißdampf erfolgen, der auf Grund seiner größeren Wärmekapazität die Aushärtung des Bindemittels beschleunigt. Der Heißdampf reduziert auch die Haftung des im heißen Zustand noch klebrigen Pulverlackes an den heißen Formwerkzeugen.

Wegen der im Vergleich zu Phenolharzen geringeren Duroplastizität des Pulverlack-Bindemittels ist es günstig, nach der Entnahme der noch plastischen Formteile aus dem Formwerkzeug diese auf einem Form-Stützlaminat zur Abkühlung abzulegen.

Die Bindemittelmischung a), die Prepregs und auch die ausgehärteten Formteile weisen einen verminderten Anteil von freien Phenolen oder Formaldehyd auf. Damit werden Gefährdungen durch diese gesundheitsschädlichen Stoffe vermindert.

Diese Formteile können noch beschichtet werden oder sie dienen als Träger für andere Bauteile. Das kann beispielsweise dadurch geschehen, daβ gemeinsam mit dem Vernetzen und Formen der Formteile eine Folie auf die Oberfläche des Formteils aufgebracht wird. Diese wird durch die chemische Reaktion fest an die Oberfläche gebunden. Weiterhin ist es möglich, durch nachträgliches Kaschieren und Laminieren von Folien eine besondere Beschichtung der Oberfläche zu erreichen. Verfahren zum Kaschieren von Formteilen sind in der Industrie weit verbreitet. Sie können nach dem Stand der Technik ausgeführt werden.

Weiterhin ist es möglich, die Oberfläche der Formteile zu beflocken. Dabei werden mittels Klebstoffen kurze Fasern im wesentlichen senkrecht auf die Oberfläche gebracht, die dann eine dichte und weiche Oberfläche hervorrufen. Verfahren zum Beflocken sind ebenfalls bekannt. Die aus den erfindungsgemäßen Massen hergestellten Formteile können gegebenenfalls lackiert werden. Es können dabei alle bekannten Überzugsmittel eingesetzt werden, die in der Industrie bekannt sind. Nach dem Erwärmen entstehen glatte, glänzende Überzüge.

Die auf diese Art und Weise beschichteten Formteile zeigen eine ansprechende dekorative Wirkung. Je nach Auswahl des Verfahrens können glatte, weiche, genarbte oder auch chemikalienresistent beschichtete Oberflächen erhalten werden. Durch zusätzliche Verwendung von flammhemmenden Zusatzstoffen können auch Formteile erhalten werden, die gegen Feuer widerstandsfähig sind.

Durch die erfindungsgemäße Verfahrensweise werden die Eigenschaften des Pulverlackes bei der Herstellung von Faservlies und Faservlies-Formteilen ausreichend beachtet, wodurch die hergestellten Faservliese und Faservliesformteile in ihren technischen Eigenschaften völlig gleichwertig sind mit denjenigen, die mit Duroplasten hergestellt wurden. Ein wesentlicher Vorteil liegt aber darin, daß selbst bei einer unzureichenden Reaktion von den Pulverlacken keine Geruchsbelästigung ausgeht. Gleichzeitig wird ein erheblicher Beitrag zum Umweltschutz geleistet, da gemäß dem vorliegenden Verfahren Pulverlack-Recyclingmaterial eine Wiederverwendung findet.

Die Faservliese und Formteile können für übliche Anwendungszwecke in üblichen Bereichen, z.B. in der Automobilindustrie eingesetzt werden.

### Beispiel 1

Es wird eine Mischung aus 9 g eines handelsüblichen pulverförmigen Phenolharzes (Novolak mit Hexamethylentetramin) mit einer durchschnittlichen Korngröße von 35 µm und einer Vernetzungstemperatur von 150°C sowie 40 g eines pigmentierten Pulverlacks auf Basis von handelsüblichem Epoxidharzpulver, sowie 50 g eines pigmentierten Pulverlacks auf Basis von Polyesterharzen, wobei die Pulverlacke einen Pigmentanteil von jeweils 10 % aufweisen, in einem handelsüblichen Mischaggregat homogenisiert.
(Polyester : Epoxid = 1,25 : 1; 10 % Phenolharzanteil)

Die Mischung kann ohne weiteren Reaktivitätsverlust über längere Zeit gelagert werden.

### Beispiel 2

Es wird eine Mischung aus einem zu 10 % mit Bariumsulfat pigmentierten Epoxidharzpulver und 30,1 g eines nicht-pigmentierten Polyesterpulverlacks hergestellt sowie 0,4 g Tetrabutylammoniumbromid zugesetzt, und die gesamte Mischung wird dann gründlich homogenisiert.

Als Polyesterpulver oder Epoxidpulver werden Filterstäube aus der Herstellung der Pulverlacke eingesetzt. Diese werden homogenisiert und dann wird eine Durchschnittsprobe dieser Anteile in den Beispielen eingesetzt.

Aus den Pulvern der Beispiele 1 oder 2 werden mit einem auf bekannte Art und Weise hergestellten Faservlies, das über 80 % Baumwollfasern enthält, Prepregs hergestellt. Dazu werden die Faservliese durch mechanische Bewegung homogen mit dem über eine Banddosierwaage zugeführten Bindemittelpulver vermischt und durch einen Wärmekanal geführt (ca. 2 - 3 min., 80°C - 100°C). Dabei entstehen lagerstabile Prepregs, in denen Harz und Faser sich miteinander verbunden haben. Dabei wird das Prepreg beim Abkühlen durch überstreichende Luft getrocknet.

Aus diesen Prepregs werden Formteile hergestellt. Dabei werden die Prepregs mit einem angetriebenen Schneidemesser zugeschnitten, in einer Presse in die beabsichtigte Form gebracht und dort 100 bis 110 Sekunden bei Temperaturen zwischen 140°C und 160°C ausgehärtet. Dabei wird bevorzugt die Temperatur durch Heizen mit Heißdampf erzielt. Nach dem Aushärten entstehen duroplastische, in der Wärme formstabile Produkte.

Die Dichte kann über die Menge des Prepregs bzw. über den eingestellten Druck beeinflußt werden. Die entstehenden vernetzten Formteile werden aus der Preßform entnommen, gegebenenfalls mit einem Luftstrom getrocknet und abgekühlt und auf einem Stützlaminat abgelegt.

Die so erhaltenen Formteile sind nach Abkühlung formstabil und weisen nur einen geringen oder keinen Gehalt an freiem Phenol bzw. Formaldehyd auf.

## Patentansprüche

1. Verfahren zum Herstellen von Faservliesen und Faservlies-Formteilen, insbesondere in Formwerkzeugen, bei dem Faservliese mit Bindemitteln auf der Basis von Pulverlackabfällen chemisch gebunden werden, dadurch gekennzeichnet, daß
eine Mischung, enthaltend
a) 20 bis 45 Gew.-% einer pulverförmigen Bindemittelmischung, enthaltend
a1) 0 bis unter 30 Gew.-% Phenolharz und
a2) 100 bis über 70 Gew.-% Abfälle von noch nicht vernetzten Pulverlacken auf Basis von Epoxid-, Polyester-,Polyurethan- und/oder Acrylatharzen mit reaktiven Gruppen, und
b) 80 bis 55 Gew.-% organischer und/oder anorganischer Fasern, verarbeitet wird.

2. Verfahren nach Anspruch 1, dadurch gekennzeichnet, daß das Bindemittel mittels einer Materialaufgabestation zugegeben wird, die für das Bindemittel geregelt wird.

3. Verfahren nach Anspruch 1 oder 2, dadurch gekennzeichnet, daß das Bindemittel mittels einer oder mehrerer Dosierwalzen zugegeben wird, wobei die Struktur der Riffelung der Dosierwalze zur Erzielung eines größeren Rieselfähigkeitsbereiches für das Bindemittel verändert wird.

4. Verfahren nach einem der Ansprüche 1 bis 3, dadurch gekennzeichnet, daß die Zugabe des Bindemittels über eine Banddosierwaage erfolgt.

5. Verfahren nach einem der Ansprüche 1 bis 4, dadurch gekennzeichnet, daß bei der Verformung von Faservlies zu Formteilen in heißen Formwerkzeugen die Reaktion zur schnelleren Aushärtung des Bindemittels durch den Einsatz von Heißdampf beschleunigt wird.

6. Verfahren nach Anspruch 5, dadurch gekennzeichnet, daß der Heißdampf mit einem Druck von 1 bis 15 bar in das Formwerkzeug eingebracht wird.

7. Verfahren nach Anspruch 4 oder 5, dadurch gekennzeichnet, daß das Formwerkzeug vor dem Einbringen der Mischung aus Vlies und Bindemittel mit Heißdampf beaufschlagt wird.

8. Verfahren nach einem der Ansprüche 4 bis 7, dadurch gekennzeichnet, daß die Formteile nach der Entnahme aus dem Formwerkzeug zur Abkühlung auf ein Form-Stützlaminat gelegt werden.

9. Verfahren nach wenigstens einem der Ansprüche 4 bis 8, dadurch gekennzeichnet, daß das gebundene Faservlies bzw. Formteil getrocknet wird.

10. Mischung zur Durchführung des Verfahrens zur Herstellung von Faservliesen und Formteilen aus Faservliesen nach einem der Ansprüche 1 bis 9, enthaltend
a) 20 bis 45 Gew.-% einer pulverförmigen Bindemittelmischung, enthaltend
a1) 0 bis unter 30 Gew.-% Phenolharz und
a2) 100 bis über 70 Gew.-% Abfälle von noch nicht vernetzten Pulverlacken auf Basis von Epoxid-, Polyester-,Polyurethan- und/oder Acrylatharzen mit reaktiven Gruppen, und
b) 80 bis 55 Gew.-% organischer und/oder anorganischer Fasern.

11. Mischung nach Anspruch 10, dadurch gekennzeichnet, daß als Pulverlackabfälle Epoxidharze und Polyesterharze in einem Mischungsverhältnis von 1 : 0,2 bis 1 : 7 eingesetzt werden.

12. Mischung nach Anspruch 10 oder 11, dadurch gekennzeichnet, daß es sich bei den Pulverlackabfällen um Pulverlackrecyclingmaterial handelt.

13. Verwendung der Mischungen nach Anspruch 10, 11 oder 12, zur Herstellung von Formteilen aus Faservliesen.

14. Verwendung nach Anspruch 13, dadurch gekennzeichnet, daß als Pulverlackabfälle Epoxidharze und Polyesterharze in einem Mischungsverhältnis von 1 : 0,2 bis 1 : 7 eingesetzt werden.

15. Verwendung nach einem der Ansprüche 13 oder 14, dadurch gekennzeichnet, daß Additive, insbesondere Flammschutzmittel, zugesetzt werden.

## Claims

1. Process for the production of non-wovens and non-woven mouldings, especially in moulding tools, in which non-wovens are chemically bonded to binders based on powder coating waste material, characterised in that a mixture containing
a) from 20 to 45 wt.% of a powdered binder mixture containing
a1) from 0 to less than 30 wt.% of phenolic resin and
a2) from 100 to over 70 wt.% of waste material of as yet uncrosslinked powder coatings based on epoxide, polyester, polyurethane and/or acrylate resins containing reactive groups, and
b) from 80 to 55 wt.% of organic and/or inorganic fibres,
is processed.

2. Process according to claim 1, characterised in that the binder is added by means of a material feeding station which is adjusted for the binder.

3. Process according to claim 1 or 2, characterised in that the binder is added by means of one or more metering rollers, the structure of the ribbing of the metering roller being altered in order to obtain a wider pourability range for the binder.

4. Process according to any one of claims 1 to 3,
characterised in that addition of the binder is carried out via a proportioning weigher conveyor.

5. Process according to any one of claims 1 to 4,
characterised in that, in the shaping of the non-woven to form mouldings in hot moulding tools, the reaction is accelerated by the use of superheated steam in order that the binder cures more rapidly.

6. Process according to claim 5, characterised in that the superheated steam is introduced into the moulding tool at a pressure of from 1 to 15 bar.

7. Process according to claim 4 or 5, characterised in that the moulding tool is exposed to superheated steam before the mixture of non-woven and binder is introduced.

8. Process according to any one of claims 4 to 7,
characterised in that the mouldings, after being removed from the moulding tool, are placed on a mould-supporting laminate to cool.

9. Process according to at least one of claims 4 to 8,
characterised in that the bonded non-woven or moulding is dried.

10. Mixture for carrying out the process for the production of non-wovens and non-woven mouldings according to any one of claims 1 to 9, containing
a) from 20 to 45 wt.% of a powdered binder mixture containing
a1) from 0 to less than 30 wt.% of phenolic resin and
a2) from 100 to over 70 wt.% of waste material of as yet uncrosslinked powder coatings based on epoxide, polyester, polyurethane and/or acrylate resins containing reactive groups, and
b) from 80 to 55 wt.% of organic and/or inorganic fibres.

11. Mixture according to claim 10, characterised in that there are used as the powder coating waste material epoxide resins and polyester resins in a mixing ratio of from 1:0.2 to 1:7.

12. Mixture according to claim 10 or 11, characterised in that the powder coating waste material is powder coating recycling material.

13. Use of the mixtures according to claim 10, 11 or 12 in the production of mouldings from non-wovens.

14. Use according to claim 13, characterised in that there are used as the powder coating waste material epoxide resins and polyester resins in a mixing ratio of from 1:0.2 to 1:7.

15. Use according to any one of claims 13 or 14, characterised in that additives, especially flameproofing agents, are added.

## Revendications

1. Procédé de production de voiles de fibres et de pièces profilées en voiles de fibres, en particulier dans les outils de formage, dans lequel on relie chimiquement les voiles de fibres avec des liants à base de déchets de vernis pulvérulents, caractérisé en ce qu'on transforme un mélange contenant
a) de 20 à 45 %en poids d'un mélange de liant pulvérulent contenant
a1) de 0 à moins de 30 % en poids de résine phénolique et
a2) de 100 à plus de 70 % en poids de déchets de vernis pulvérulents non encore réticulés, à base de résines époxyde, polyester-polyuréthane et/ou acrylate avec des groupes réactifs et
b) de 80 à 55 % en poids de fibres organiques et/ou inorganiques.

2. Procédé selon la revendication 1, caractérisé en ce qu'on ajoute le liant au moyen d'un poste de fourniture de matériaux réglé pour le liant.

3. Procédé selon la revendication 1 ou 2, caractérisé en ce qu'on ajoute le liant au moyen d'un ou plusieurs cylindres de dosage, dans lequel on modifie la structure des cannelures du cylindre de dosage pour produire un plus grand domaine de fluidité pour le liant.

4. Procédé selon l'une des revendications 1 à 3, caractérisé en ce que l'addition du liant s'effectue par l'intermédiaire d'une balance de dosage par bande.

5. Procédé selon l'une des revendications 1 à 4, caractérisé en ce que dans le façonnage des voiles de fibre en pièces profilées dans des outils de formage chauds, on accélère la réaction pour rendre plus rapide le durcissement du liant en utilisant de la vapeur chaude.

6. Procédé selon la revendication 5, caractérisé en ce que la vapeur chaude est appliquée avec une pression de 1 à 15 bars dans l'outil de formage.

7. Procédé selon la revendication 4 ou 5, caractérisé en ce que l'outil de formage est alimenté avec de la vapeur chaude avant l'introduction du mélange de voile et du liant.

8. Procédé selon l'une des revendication 4 à 7, caractérisé en ce que les articles moulés sont déposés, après avoir été retirés de l'outil de formage, aux fins de refroidissement sur un stratifié d'appui de moule.

9. Procédé selon au moins une des revendications 4 à 8, caractérisé en ce qu'on sèche le voile de fibres ou selon les cas la pièce profilée.

10. Mélange pour la réalisation du procédé de fabrication de voiles de fibres et de pièces profilées à partir de voiles de fibres selon l'une des revendications 1 à 9, contenant
a) de 20 à 45 %en poids d'un mélange de liant pulvérulent contenant
a1) de 0 à moins de 30 % en poids de résine phénolique et
a2) de 100 à plus de 70 % en poids de déchets de vernis pulvérulents non encore réticulés, à base de résines époxyde, polyester-polyuréthane et/ou acrylate avec des groupes réactifs et
b) de 80 à 55 % en poids de fibres organiques et/ou inorganiques.

11. Mélange selon la revendication 10, caractérisé en ce qu'on utilise comme déchets de vernis pulvérulents des résines époxyde et des résines polyester dans un rapport de mélange de 1:0,2 à 1:7.

12. Mélange selon la revendication 10 ou 11, caractérisé en ce que, pour les déchets de vernis pulvérulents, il s'agit d'un matériau de recyclage de vernis pulvérulent.

13. Utilisation des mélanges selon les revendications 10, 11 ou 12 pour la fabrication de pièces profilées à partir de voiles de fibres.

14. Utilisation selon la revendication 13, caractérisée en ce qu'on utilise comme déchets de vernis pulvérulents des résines époxyde et des résines polyester dans un rapport de mélange de 1:0,2 à 1:7.

15. Utilisation selon l'une des revendications 13 ou 14, caractérisée en ce qu'on ajoute des additifs, en particulier des produits ignifuges.
